# EUROPEAN PATENT APPLICATION

(11) **EP 3 489 799 A1**
(43) Date of publication of application: **29.05.2019**
(21) Application number: 17203603.0
(22) Date of filing: 24.11.2017
(51) Int. Cl.: G06F 3/01, H04W 52/02

(54) **METHOD AND DEVICE FOR DOWNLOADING VIDEO AND AUDIO DATA**

(71) Applicant: Vestel Elektronik Sanayi ve Ticaret A.S., 45030 Manisa (TR)
(72) Inventor: Kadir, YILDIZ, 45030 Manisa (TR); Alper Sait, ER, 45030 Manisa (TR)
(74) Representative: Flint, Adam

(57) **Abstract**

A method and device for selectively downloading video data and audio data of a media item is provided. The video data and audio data are simultaneously downloaded, with the video data being sent to a screen (133) to be displayed and the audio data being sent to a loudspeaker (132) to be played. When it is determined that a user (140) is not watching the screen (133), downloading of the video data of the media item is paused.

## Description

### Technical Field

The present disclosure relates to a method and a device for downloading video and audio data.

### Background

With a connection to a network such as the Internet, an electronic device is able to download media items from a remote server. Common media items include television shows, films, and music videos, which all comprise a video part and an audio part. A user is able to experience the media item by causing the electronic device to download it and render the video part using a screen and the audio part using a loudspeaker (which may be provided as part of the electronic device or in some other device or devices).

### Summary

According to a first aspect disclosed herein, there is provided A method of selectively downloading video data and audio data of a media item, the method comprising; simultaneously downloading video data and audio data of the media item; sending the downloaded video data to a screen to be displayed; sending the downloaded audio data to a loudspeaker to be played; determining that a user is not watching the screen; and in response to determining that the user is not watching the screen, pausing downloading of video data of the media item.

The video data and/or the audio data that is downloaded may be processed prior to being played. For example, the video data and/or the audio data that is downloaded may be decoded, decompressed, etc. as necessary prior to being played.

In an example, determining that the user is not watching the screen comprises detecting a gaze direction of the user being away from the screen.

In an example, the method comprises, after pausing downloading of video data of the media item: determining that the user is watching the screen; and in response to determining that the user is watching the screen, resuming downloading of video data of the media item.

In an example, determining that the user is watching the screen comprises detecting a gaze direction of the user being towards the screen.

In an example, the method comprises using a camera to detect the user's gaze direction.

In an example, the method comprises, in response to determining that the user is not watching the screen, turning off the screen.

In an example, determining that the user is not watching the screen comprises determining that the user has not been detected by a presence sensor co-located with the screen for a predetermined threshold time.

In an example, determining that the user is not watching the screen comprises determining using an accelerometer co-located with the screen to determine that the screen has not moved for a predetermined amount of time.

According to a second aspect disclosed herein, there is provided a device for selectively downloading video data and audio data of a media item, the device comprising; an input for downloading video data and audio data of a media item; a first output for sending the downloaded video data to a screen for displaying the video data; a second output for sending the downloaded audio data to a loudspeaker for playing the audio data; and a sensor for determining whether a user is watching the screen; the device being arranged to pause downloading of video data of the media item in response to determining that the user is not watching the screen.

In an example, the device is arranged to resume downloading of video data of the media item in response to determining that the user is watching the screen.

In an example, the sensor comprises a camera.

In an example, the sensor comprises a presence sensor co-located with the screen, and the device is arranged to determine that the user is not watching the screen by determining that the user has not been detected by the presence sensor for a predetermined threshold time.

In an example, the sensor comprises an accelerometer co-located with the screen, and the device is arranged to determine that the user is not watching the screen by determining a lack of input from the accelerometer for more than a predetermined amount of time.

### Brief Description of the Drawings

To assist understanding of the present disclosure and to show how embodiments may be put into effect, reference is made by way of example to the accompanying drawings in which:
Figure 1 shows schematically an example system for downloading media items for playback on an electronic device;
Figure 2 shows an example electronic device in more detail;
Figure 3 shows a second example electronic device; and
Figure 4 shows a flowchart illustrating a method in accordance with examples described herein.

### Detailed Description

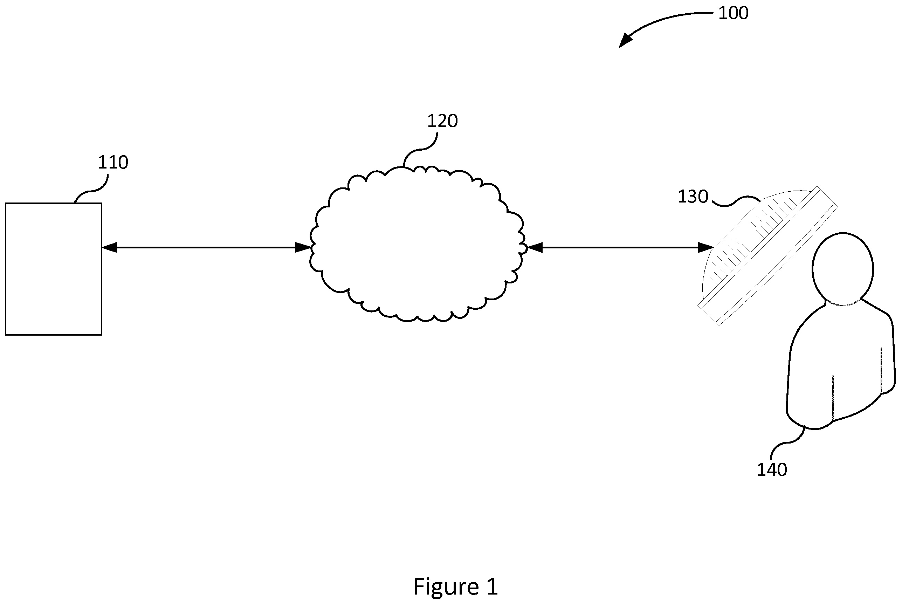

Figure 1 shows a system 100 in accordance with examples described herein. The system 100 comprises a server 110, a network 120, and a television set 130. The television 130 is shown being watched by a user 140. The server 110 and television 130 are connected to the network 120 via one or more wired or wireless connections as known in the art. The network 120 may be or include the Internet. Hence, in one example the server 110 may be connected to the network 120 via a wired connection such as an Ethernet connection, and the television 130 may be connected to the network 130 via a wireless connection such as a WiFi connection. Other connections are possible. In any case, the server 110 and television 130 are thereby operably coupled through the network 120.

The server 110 is a remote storage device for storing data which is accessible by the television 130 via the network 120. Specifically, the server 110 stores media items, such as films, television shows, music videos and the like. The television 130 can download these media items from the server 110 via the network 120 to be displayed to the user 140.

The connection to the server 110 via the network 120 is provided by an Internet Service Provider (ISP), as known in the art. The ISP charges the user 140 for data usage, e.g. per megabyte of data downloaded over the network 120.

A media item may comprise both video data and audio data. The video data represent a video part of the media item to be displayed on a screen. The audio data represent an audio part of the media item to be output by one or more loudspeakers. For example, a film comprises a visual part (the video) to be watched by the user 140 on a screen of the television 130 and an auditory part (the audio) to be heard by the user 140 when played by a loudspeaker of or associated with the television 130. The audio and video are associated with each other in that the audio accompanies the video.

The television 130 is configured to download the video data and audio data over the network 120 (e.g. from server 110) and render the video and audio accordingly using a screen and loudspeaker, respectively. This may include decompressing and/or decoding the received video and audio data, as is known in the art.

For the user 140 to experience the video, the user 140 must be looking at the screen of the television 130 on which the video is played. The same is not true of the audio. That is, the user 140 does not require a line of sight to the loudspeaker playing the audio; the user 140 will hear the audio irrespective of where the user 140 is looking. Indeed, the user 140 could walk behind the television 130, or even be in another room, and still hear the audio.

In embodiments described herein, when it is determined that the user 140 is not watching the screen on which the video is playing, the download of the video over the network 120 is paused. Hence, during times when the user 140 is not watching the screen, the amount of data downloaded over the network 120 is reduced (to only the audio data). This may have the additional advantage of reducing a charge from the ISP or helping the user avoid reaching a cap on the amount of data that can be downloaded in a specific period of time.

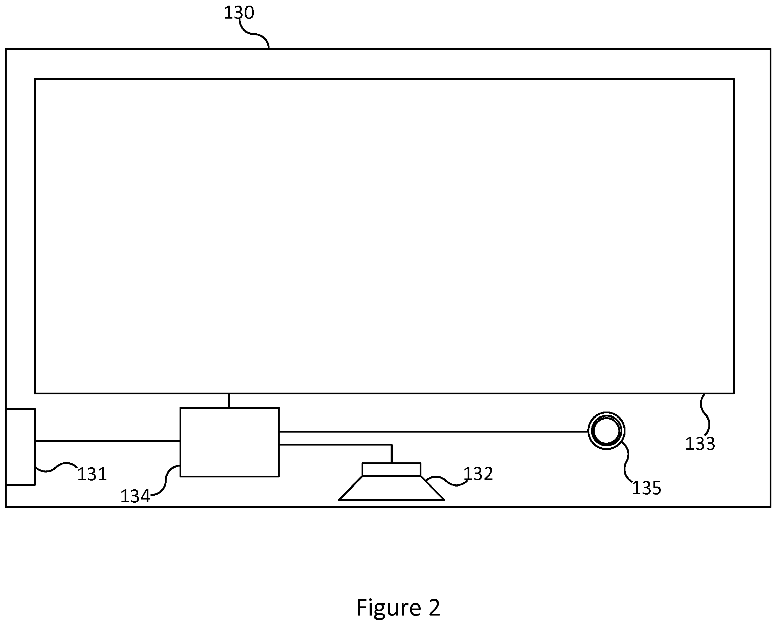

Figure 2 illustrates the television 130 in more detail. The television 130 comprises an interface 131, a loudspeaker 132, a screen 133, a processor 134, and a sensor 135. The processor is operatively coupled to each of the interface 131, loudspeaker 132, screen 133 and sensor 135.

The interface 131 comprises hardware for connecting to the network 120 by whichever connection is used. For example, the interface 131 may comprise a WiFi transceiver in cases where the television 131 connects to the network 120 via a WiFi connection. In any case, the interface 131 is configured to receive the aforementioned video data and audio data from the network 120.

The loudspeaker 231 comprises an electroacoustic transducer for generating sound in response to a drive signal. The loudspeaker 132 is configured to render the audio part of a media item downloaded via the interface 131. More than one loudspeaker 231 may be present. For example, the audio part of the media item may be a stereo media item, in which case at least one left loudspeaker and one right loudspeaker may be present, each loudspeaker for rendering a respective left or right audio channel of the audio part of the media item.

The screen 133 comprises an electronic display for displaying the video part of a media item downloaded via the interface 131. Examples of suitable screens include LED, OLED, and LCD screens, etc.

In operation, the processor 134 is configured to download a media item via the network 120, process the media item accordingly (e.g. decompress, unencrypt, etc.) and provide the video data to the screen 133 and the audio data to the loudspeaker 132. This is a known process, e.g. as used in video streaming over the Internet, and so is not described in more detail here.

The sensor 135 is provided for determining that the user 140 is not watching the screen 133. In some examples, this may be done explicitly such as by detecting a gaze direction of the user 140 and determining whether or not the detected gaze is directed towards the screen 133. In other examples, this may be done implicitly such as by detecting that the user 140 is not located in front of the screen 133. In the latter cases it may be assumed that if the user 140 is located in front of the screen 133 then the user 140 will be watching the screen 133 (at least some of the time).

In the example of Figure 2, the sensor 135 is a camera for detecting the user 140. Specifically, the camera 135 is constructed and arranged to capture an image of the environment around the television 130 (e.g. an image of the room in which the television 130 is located) and provide these images to the processor 134. Hence, the camera 135 may function as a presence sensor for detecting the presence of the user 140. Other types of presence sensor, such as infrared (IR) sensors, could be used.

The processor 134 is configured to process data received from the sensor 135 to determine times during which the user 140 is not watching the screen. This may only be performed whilst the television 130 is playing a media item. When the processor 134 determines that the user 140 is not watching the screen 133, it pauses downloading of the video part of the media item.

In the above, it has been described that the processor 134 is configured to at least make a determination that the user 140 is not watching the screen 133. However, the processor 134 may also be configured to make a determination that the user 140 is watching the screen 133. That is, the processor 134 may be configured to process data received from the sensor 135 to determine whether or not the user 140 is watching the screen 133 (i.e. to make a determination being one of either a positive determination that the user 140 is watching the screen 133 or a negative determination that the user 140 is not watching the screen 133). In such cases, the processor 134 may be configured to resume downloading of the video data in response to determining that the user 140 is (once again) watching the screen 133. Again, this may be performed by processing data received from the sensor 135. For example, by determining a (current) gaze direction of the user 140 as being directed towards the screen 133.

The audio part and video part may be associated with each other in that their playback should be coordinated. For example, an audio part of a film comprising spoken dialogue should be aligned with playback of the video part. Hence, when resuming downloading of the video, the processor 134 may be configured to resume playback of the video part to be aligned with the audio part (which was not paused). The processor 134 may not download data representing the video part for some or all of the time period in which the download was paused. That is, the processor 134 may identify a current playback point (e.g. a timestamp) based on the (not paused) audio, and resume downloading the video part from a corresponding point (e.g. the same timestamp) in the video part.

Although the above has been described with reference to a television 130, it is understood that it applies equally to other electronic devices having an interface 131 for downloading media items for playback on a screen 133 and a loudspeaker 132. Examples of such electronic devices include laptops, smartphones, tablets, etc. In other examples, the screen and loudspeaker may be provided separately of the electronic device that downloads the media items. For example, the electronic device may be a computer or a games console or the like which is connected to a television set or a display screen and loudspeakers.

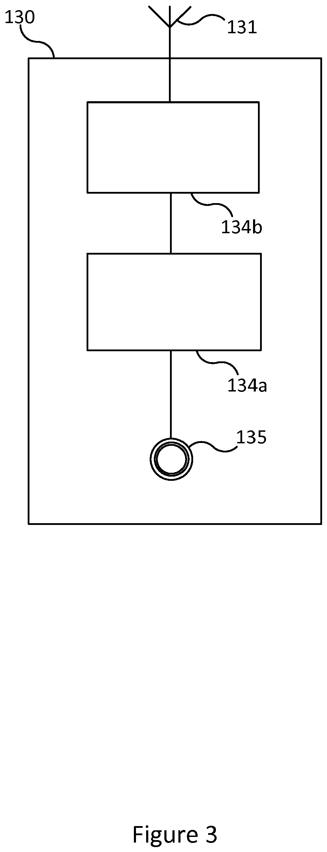

Figure 3 is a block diagram illustrating schematically an electronic device 130 in accordance with embodiments described herein. In this example, the screen and loudspeaker are not shown, for the sake of clarity.

The electronic device 130 comprises an interface 131 and a sensor 135 as described above in relation to the television 130 of Figures 1 and 2. The electronic device 130 in Figure 3 comprises a playback controller 134a and a network controller 134b. The playback controller 134a is operatively coupled to the sensor 135 and the network controller 134b. The network controller 134b is operatively coupled to the interface 131. The playback controller 134a and network controller 134b may be implemented in software running on a processor such as processor 134 described above in relation to Figure 2.

As mentioned above, the sensor 135 may comprise a camera or a camera system for detecting the user 140. In such an example, the sensor 135 records and sends image data to the playback controller 134a. The playback controller 134a analyses the image data using, for example, an image processing algorithm to identify the user's eye(s) and determine the user's gaze direction. Algorithms for doing so are well known in the art. From the gaze direction, the playback controller 134a determines whether or not the user is watching the screen by determining that the gaze direction is not towards the screen. Again, algorithms for doing so are known in the art.

There may be multiple users present in images captured by the sensor 135. In such cases, the playback controller 134a may determine a respective gaze direction of each user. If there is no user who is watching the screen, playback controller 134a communicates with the network controller 134b to pause downloading of the video part of the media item (but to maintain download of the audio part). Hence, only the audio is played when no users are watching the screen.

In further examples, the playback controller 134a also determines if the gaze direction is towards the screen. In such cases, when the download of the video part has been paused as described above, the playback controller 134a sends a signal to the network controller 134b to resume download of the video part in response to determining that a user is watching the screen. This means that the audio part is always downloaded and played out via the loudspeaker 132, but download (and playback) of the video part is only performed when a user is watching the screen 133. This provides efficient network data usage because the video part is not downloaded when not needed.

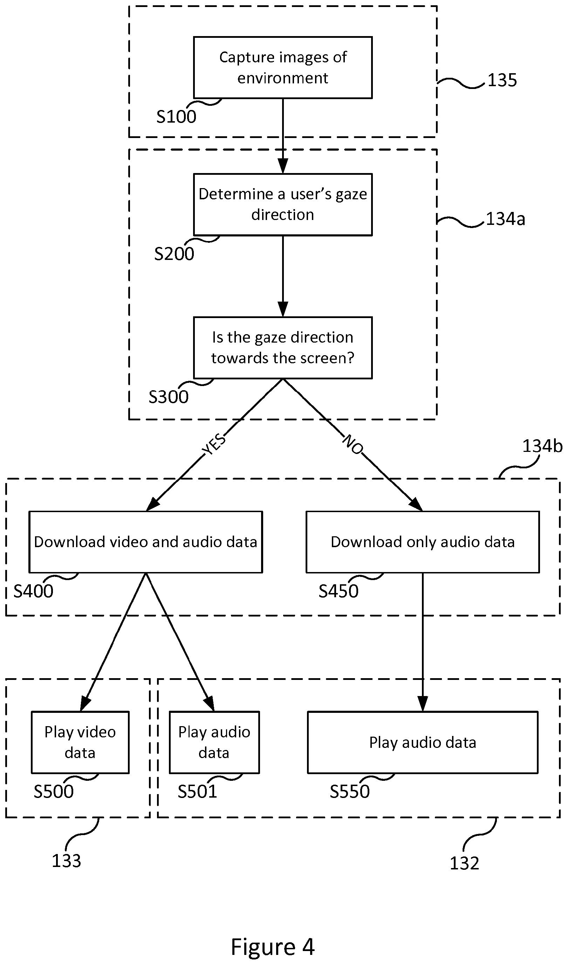

Figure 4 shows a flowchart illustrating an example method. Each step of the method is shown in a dashed box indicating the component of the electronic device 130 which performs that step.

At step S100, the sensor 135 (a camera in this example) captures images of the environment. For example, the camera may be located at the electronic device 130 and arranged to capture images of the area in front of the screen 133, where the user 140 is normally to be found when watching the screen 133. The captured images are provided by the sensor 135 to the playback controller 134a.

At step S200, the playback controller 134a determines the user's gaze direction by processing the images received from the sensor 135.

At step S300, the playback controller 134a determines whether or not the user's gaze direction (determined at step S200) is towards the screen 133. This may comprise explicitly determining whether a line of sight of the user (in the gaze direction) intersects with the screen 133. In another example, this may comprise determining whether a line of sight of the user 140 is directed towards the screen 133 within a predetermined angular range, e.g. if the user 140 is looking substantially towards the screen 133 such as within 5 or 10 degrees of the screen 133.

In yet another example, the determination may not involve detecting the user's gaze direction explicitly. Instead, if the sensor 135 is located at the screen 133 then determining whether or not the gaze direction is directed towards the screen 133 may comprise analysing the images to identify the user's eye. If the user's eye can be identified in the image, then the user 140 is at least facing the sensor 135 (and therefore the screen 133 in this example). If the user's eye cannot be detected in the image, then the user 140 is facing away from the screen 133 (or is not present at all).

If the user 140 is looking towards the screen 133, then the method proceeds to step S400 in which the network controller 134b downloads both the video and audio data of the media item. Then, the downloaded video data are sent to the screen 133 for playback in step S500 and the downloaded audio data are sent to the loudspeaker 132 at step S501 for playback.

Instead, if the user 140 is not looking towards the screen 133, then the method proceeds to step S450 in which the network controller 134b downloads only the audio data of the media item. Then, the downloaded audio data are sent to the loudspeaker 132 for playback at step S550.

When it has been determined that the user 140 is not watching the screen 133, the playback controller 134a may turn off the screen 133 to save power. This provides efficient power usage because the screen 133 is only turned on when needed.

As mentioned above, other types of sensor 135 could be used other than cameras. For example, an IR sensor may be provided which is located at the screen 133 and arranged to determine a presence of the user 140. In such cases, steps S200-300 comprise analysing data from the sensor 135 to determine whether or not a user is present. If a user is present, it is assumed that he or she is watching the screen 133. This may be useful, for example, in situations where the user 140 briefly leaves the room but remains within earshot of the audio part of the media item.

In examples in which the electronic device 130 is a mobile electronic device, such as for example a smartphone or tablet computer, another example sensor 135 is an accelerometer. It may be assumed that if the user 140 is holding the mobile electronic device that he or she is watching the screen 133. That is, it may be assumed that when the mobile electronic device is not moving then the user 140 is not watching the screen 133. For example, users often listen to music using their smartphones. A common practice is to stream music videos, but the user 140 is only really interested in listening to the music rather than watching the video itself. Hence, a user may stream a music video and then place their smartphone down to enjoy the music while they perform another task. In such cases, embodiments described herein advantageously pause downloading of the video part (and may even turn off the screen 133).

In another example, the playback controller 134a may determine that the user 140 is not watching the screen 133 by analysing data from an accelerometer to determine that the electronic device 130 has been played facedown (screen-down) on a surface.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of selectively downloading video data and audio data of a media item, the method comprising;
simultaneously downloading video data and audio data of the media item; sending the downloaded video data to a screen to be displayed;
sending the downloaded audio data to a loudspeaker to be played; determining that a user is not watching the screen; and
in response to determining that the user is not watching the screen, pausing downloading of video data of the media item.

2. A method according to claim 1, wherein determining that the user is not watching the screen comprises detecting a gaze direction of the user being away from the screen.

3. A method according to claim 1 or claim 2, comprising, after pausing downloading of video data of the media item:
determining that the user is watching the screen; and
in response to determining that the user is watching the screen, resuming downloading of video data of the media item.

4. A method according to claim 3, wherein determining that the user is watching the screen comprises detecting a gaze direction of the user being towards the screen.

5. A method according to any of claims 2 to 4, comprising using a camera to detect the user's gaze direction.

6. A method according to any of claims 1 to 5, comprising, in response to determining that the user is not watching the screen, turning off the screen.

7. A method according to any of claims 1 to 6, wherein determining that the user is not watching the screen comprises determining that the user has not been detected by a presence sensor co-located with the screen for a predetermined threshold time.

8. A method according to any of claims 1 to 7, wherein determining that the user is not watching the screen comprises determining using an accelerometer co-located with the screen to determine that the screen has not moved for a predetermined amount of time.

9. A device for selectively downloading video data and audio data of a media item, the device comprising;
an input for downloading video data and audio data of a media item;
a first output for sending the downloaded video data to a screen for displaying the video data;
a second output for sending the downloaded audio data to a loudspeaker for playing the audio data; and
a sensor for determining whether a user is watching the screen;
the device being arranged to pause downloading of video data of the media item in response to determining that the user is not watching the screen.

10. A device according to claim 9, wherein the device is arranged to resume downloading of video data of the media item in response to determining that the user is watching the screen.

11. A device according to claim 9 or claim 10, wherein the sensor comprises a camera.

12. A device according to any of claims 9 to 11, wherein the sensor comprises a presence sensor co-located with the screen, and the device is arranged to determine that the user is not watching the screen by determining that the user has not been detected by the presence sensor for a predetermined threshold time.

13. A device according to any of claims 9 to 12, wherein the sensor comprises an accelerometer co-located with the screen, and the device is arranged to determine that the user is not watching the screen by determining a lack of input from the accelerometer for more than a predetermined amount of time.
